# NEUE EUROPÄISCHE PATENTSCHRIFT

(11) **EP 0 664 670 B2**
(45) Veröffentlichungstag und Bekanntmachung des Hinweises auf die Entscheidung über den Einspruch: **31.10.2001**
(45) Hinweis auf die Patenterteilung: 23.04.1997
(21) Anmeldenummer: 93923468.8
(22) Anmeldetag: 14.10.1993
(51) Int. Cl.: A23B 4/052

(54) **VERFAHREN UND VORRICHTUNG ZUM BEHANDELN VON RÄUCHERGUT**
PROCESS AND FACILITY FOR TREATING PRODUCTS TO BE SMOKE-CURED
PROCEDE ET DISPOSITIF PERMETTANT DE TRAITER DES PRODUITS A FUMER

(30) Priorität: 14.10.1992 DE 4234656
(43) Veröffentlichungstag der Anmeldung: 02.08.1995
(73) Patentinhaber: LEFA FLEISCHEREI-AUSSTATTUNG GMBH, D-73037 Göppingen (DE)
(72) Erfinder: EISELE, Joseph, D-73113 Ottenbach (DE)
(74) Vertreter: Lemke, Jörg-Michael, Dipl.-Ing.
(86) Internationale Anmeldenummer: EP9302840
(87) Internationale Veröffentlichungsnummer: WO9408462

(56) Entgegenhaltungen:
- DE-A- 2 349 195
- DE-A- 2 364 462
- DE-A- 2 457 064
- DE-A- 2 720 838
- DE-A- 3 815 889
- DE-A- 3 819 889
- DE-A- 4 017 969
- DE-U- 8 904 886
- FR-A- 2 201 038
- US-A- 3 896 242
- US-A- 3 969 996
- Sonderdruck aus "Fleischwirtschaft" 67. Jahrg. Okt. 1987 "Flüssigrauch"

## Beschreibung

Die Erfindung betrifft ein Verfahren zum Behandeln von Räuchergut, insbesondere von Fleisch- und Wurstwaren, mit einem Gemisch aus Luft und einer als Flüssigrauch bezeichneten, wasserlöslichen Flüssigkeit mit Rauchgeruch und -geschmack, die in die Luft einer Räucherkammer eingesprüht wird.

Dabei wurden bisher Sprüh- bzw. Vernebelungseinrichtungen eingesetzt, welche den Flüssigrauch mittels Druckluft zerstäuben, wobei der dabei entstehende Sprühnebel beispielsweise 15 cm oberhalb des Bodens durch die Rückwand der Räucherkammer, der Zugangstür gegenüber, eingeleitet wird. Im oberen Bereich der Räucherkammer befindet sich dabei ein Lüfter, der für eine Umwälzung des in der Räucherkammer befindlichen Volumens aus Luft und Flüssigrauch sorgt. Nachdem mit dem eingesprühten Flüssigrauch ja auch Druckluft in die Räucherkammer eingeführt wird, bedarf es zumindest einer Abluftklappe, um das überschüssige Volumen abzuleiten.

Abgesehen davon, daß bei dem bekannten Verfahren zwangsläufig ein Volumenverlust an Flüssigrauch und Luft auftreten muß, lassen auch die erzielten Räucherergebnisse zu wünschen übrig. Bei dem bekannten Verfahren nebst Vorrichtung ist somit nicht nur ein Verlust an insbesondere Flüssigrauch als nachteilig anzusehen, nachdem die bekannte Räucherkammer ja nur mit offener Abluftklappe betrieben werden kann, sondern auch die Gleichmäßigkeit der Verteilung des Flüssigrauchs innerhalb der Räucherkammer läßt zu wünschen übrig, da sich ein Teil desselben vorzeitig auf Wand und Boden der Räucherkammer niederschlägt, statt auf das Räuchergut zu gelangen.

Aus der DE-A-2 349 195 sind ein Verfahren nebst Vorrichtung bekannt, bei welchem bzw. welcher vier Düsen in einer Kammer verteilt Flüssigrauch auf und durch einen Erhitzer sprühen, woraufhin ein Lüfter das durch den Erhitzer hindurchtrehende Gemisch aus Luft und Flüssigrauch einsaugt und auf seiner Druckseite einer Räucherkammer zuführt, aus welcher die Luft mit Flüssigrauchresten wieder der Düsenkammer zugeführt wird.

Die der Erfindung zugrundeliegende Aufgabe wird darin gesehen, ein Verfahren nebst Vorrichtung der eingangs genannten Art zu schaffen, das wirtschaftlicher ist und eine bessere Qualität des Räuchergutes gewährleistet. Dabei soll insbesondere der Verbrauch an Flüssigrauch verringert und ein gleichmäßigeres Durchräuchern erzielt werden.

Diese Aufgabe wird verfahrensmäßig durch die Merkmale des Anspruchs 1 gelöst.

Da für das Einsprühen des Flüssigrauchs keinerlei Druckluft verwendet wird, kommt es auch zu keiner Volumenerhöhung, sodaß bei geschlossener Abluftklappe gearbeitet werden kann. Verluste an Flüssigrauch durch Austritt aus der Kammer, wie beim Stand der Technik, werden dadurch vermieden. Da unmittelbar nach dem Einsprühen in die eingesaugte Luft eine Verwirbelung derselben erfolgt, ergibt sich eine besonders intensive Gemischausbildung. Die Verwirbelung mit Druckerhöhung und anschließender Entspannung führt zu einer Verteilung des Flüssigrauches in der Luft in Form von Dampf (Gas). Es kommt somit zu einer Ausbildung von einer Gasphase, sodaß die gleichen physikalischen Bedingungen wie beim traditionellen Glimmrauch vorliegen. Der erfindungsgemäß erzielte, fein verteilte, trockene und stabile Rauch läßt sich unter gleichen Bedingungen wie beim traditionellen Glimmräuchern in der Räucherkammer durch Absorption auf das Räuchergut aufbringen. Es versteht sich, daß dabei nicht nur, wie erwähnt, eine Abfuhr von Abluft nicht erforderlich ist, sondern auch die Zufuhr von Frischluft unterbleiben kann.

Die Menge des einzusprühenden Flüssigrauches ist von dem jeweiligen Räuchergut und seiner gewünschten Durchräucherung abhängig und wird in Intervallen mit vorzugsweise 3 bar eingesprüht, wobei die Sprühdauer automatisch gesteuert sein kann.

Das erfindungsgemäße Verfahren führt nicht nur zu einer Einsparung an Flüssigrauch, sondern auch zu einer besonders guten und gleichmäßigen Beaufschlagung des Räuchergutes mit demselben, wodurch sich eine bisher unter Verwendung von Flüssigrauch nicht erzielbare Räucherqualität erreichen läßt.

Vorrichtungsmäßig wird die der Erfindung zugrundeliegende Aufgabe durch die Merkmale des Anspruchs 3 gelöst. Die sozusagen direkte Einspritzung des reinen Flüssigrauchs in den Lüfter, die Verwirbelung des entstehenden Gemisches aus Flüssigrauch und Räucherkammerluft und die auf der Druckseite des Lüfters erfolgende Druckerhöhung nebst anschließender Entspannung über die Düse bzw. Düsen sorgen für die weiter oben geschilderte feine Verteilung des Flüssigrauchs in der Luft mit der erläuterten Zwei-Phasen-Bildung, somit für an das herkömmliche Glimmräuchern angeglichene Verhältnisse.

Die Mischkammer ist zweckmäßig eine zentral im oberen Bereich der Räucherkammer angeordnete und im Querschnitt im wesentlichen umgekehrt U-förmig mit hohlem Quersteg und zwei hohlen Vertikalstegen ausgebildete Hohlhaube, die im Zentrum des Querstegs des U den als Radiallüfter ausgebildeten Lüfter aufweist und an den Enden der beiden Vertikalstege jeweils mindestens eine Blasdüse mit Blasrichtung nach unten besitzt. Dabei hat sich eine lichte Höhe des hohlen Querstegs des U bewährt, die nur geringfügig höher ist als die Dicke des Radiallüfters.

Zur Förderung des Flüssigrauchs wird zweckmäßig am Anfang einer Zuleitung für denselben zur Sprühdüse eine Behälterpumpe angeordnet, um den Flüssigrauch unter Druck zu setzen. Bei einer bevorzugten Ausführungsform ist die Sprühdüse eine Axial-Vollkegeldüse mit einem Öffnungswinkel von 120 Grad. Dabei wies der Radiallüfter einen Ansaugstutzen mit einem lichten Durchmesser von 210 mm auf. In der Zuleitung war ein Zweiwege-Magnet-Durchflußventil angeordnet, dessen Intervallsteuerung von einem entsprechend programmierbaren Mikroprozessor übernommen wurde.

Weitere Vorteile und Ausgestaltungen der Erfindung ergeben sich aus den Unteransprüchen.

Anhand einer in den Zeichnungen dargestellten Ausführungsform einer Vorrichtung zur Ausführung des erfindungsgemäßen Verfahrens ist die Erfindung näher erläutert.

Es zeigt:
- Fig. 1: eine Vorderansicht einer Vorrichtung zur Ausführung des Verfahrens in schematischer Ansicht;
- Fig. 2: eine Ausschnittsvergrößerung aus Fig. 1 mit Mischkammer, Lüfterrad und Sprühdüse mit Zuleitung;
- Fig. 3: eine Untersicht der Mischkammer.
- Fig. 4: eine im wesentlichen der Fig. 2 entsprechende Ansicht einer weiteren Ausführungsform der Mischkammer;
- Fig. 5: eine der Fig. 3 entsprechende Untersicht der Ausführungsform nach Fig. 3.

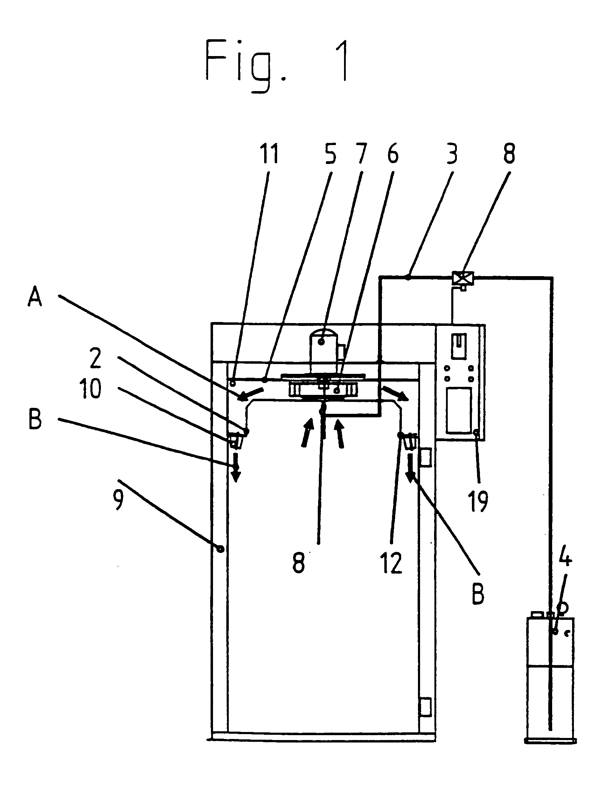

Fig. 1 zeigt eine Räucherkammer 1 mit einer Sprüheinrichtung 2, einer Zufuhrleitung 3 für Flüssigrauch, der in einer Behälterpumpe 4 vorgehalten wird, und einem Lüfter 5, bestehend aus einem Lüfterrad 6, einem Motor 7 und einer nicht gezeigten Welle, die Motor und Lüfterrad miteinander verbindet.

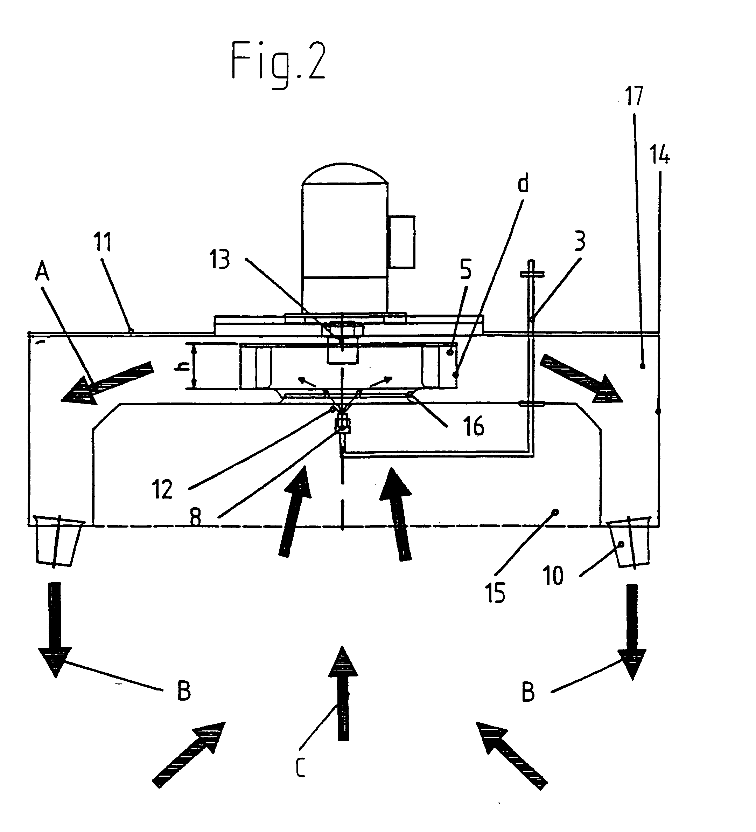

Die Sprüheinrichtung 2 besteht aus einer Sprühdüse 8 für reinen Flüssigrauch, die unmittelbar am Ende der Zufuhrleitung 3 sitzt. Sie ist zwecks direkten Einsprühens in den Lüfter 5 koaxial an der Saugseite desselben angeordnet. Auf der Druckseite des Lüfters 5 ist mindestens eine in den Innenraum 9 der Räucherkammer 1 öffnende Blasdüse 10 für das verwirbelte Gemisch aus Luft und Flüssigrauch angeordnet, dessen Ausströmen aus dem Lüfter 5 einerseits und Austreten aus der Blasdüse 10 andererseits durch die Pfeile A und B angedeutet ist. Dabei ist der Lüfter 5 in einer gesonderten Mischkammer 11 mit seiner Saugseite einer Einlaßöffnung 12 (Fig. 2) der Mischkammer zugewandt, der die Sprühdüse 8 in geringem Abstand zugeordnet ist, wobei der Lüfter 5 mit seiner Druckseite in das Innere der Mischkammer 11 fördert. Ferner sind in diesem Fall mehrere Blasdüsen 10 als Auslaßöffnungen in der Wandung 12 der Mischkammer 11 von dem Lüfter 5 beaufschlagt. Wie aus Fig. 1 zu entnehmen, ist bei der gezeigten Ausführungsform die Mischkammer 11 eine zentral im oberen Bereich des Innenraums 9 der Räucherkammer 1 angeordnete und im Querschnitt im wesentlichen umgekehrt U-förmige, mit hohlem Quersteg 13 und zwei hohlen Vertikalstegen 14 ausgebildete Hohlhaube, die im Zentrum des Querstegs 13 den als Radiallüfter ausgebildeten Lüfter 5 aufweist. An den Enden der beiden hohlen Vertikalstege 14 sind jeweils fünf Blasdüsen 10 in Reihe hintereinander mit Blasrichtung nach unten (Pfeile B) vorgesehen.

Wie ersichtlich, weist der hohle Quersteg 13 dabei eine lichte Höhe h auf, die nicht wesentlich höher ist als die Dicke d des Radiallüfters 5.

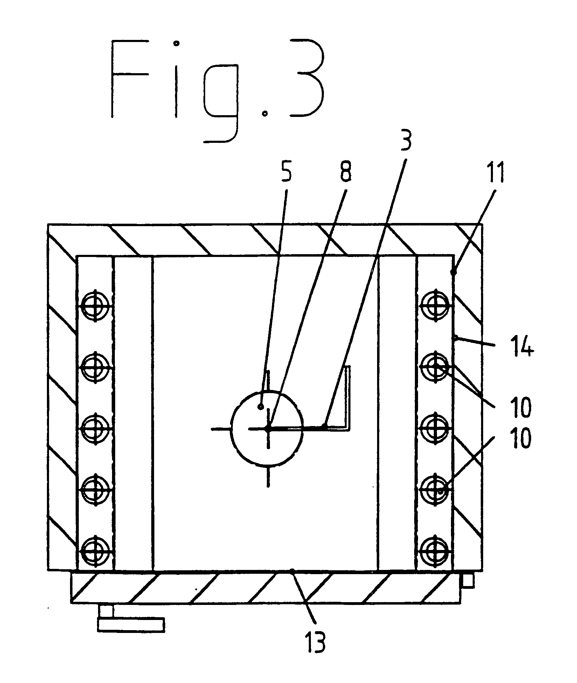

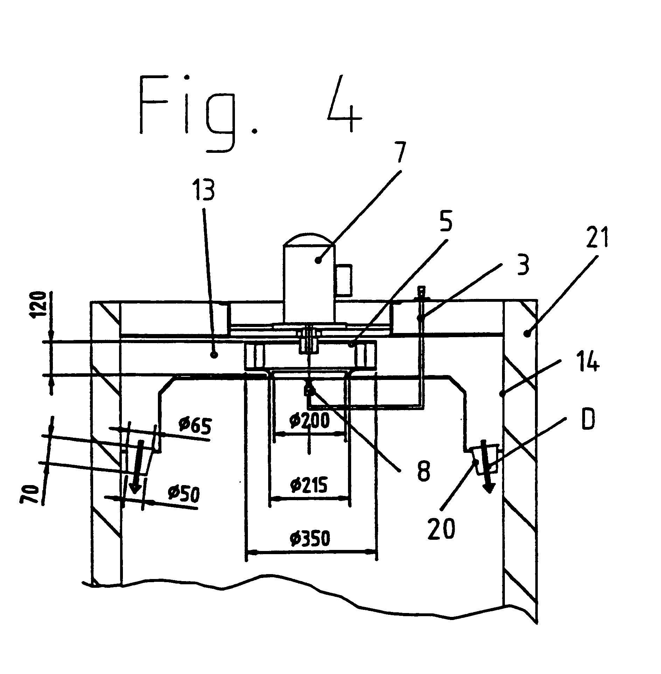

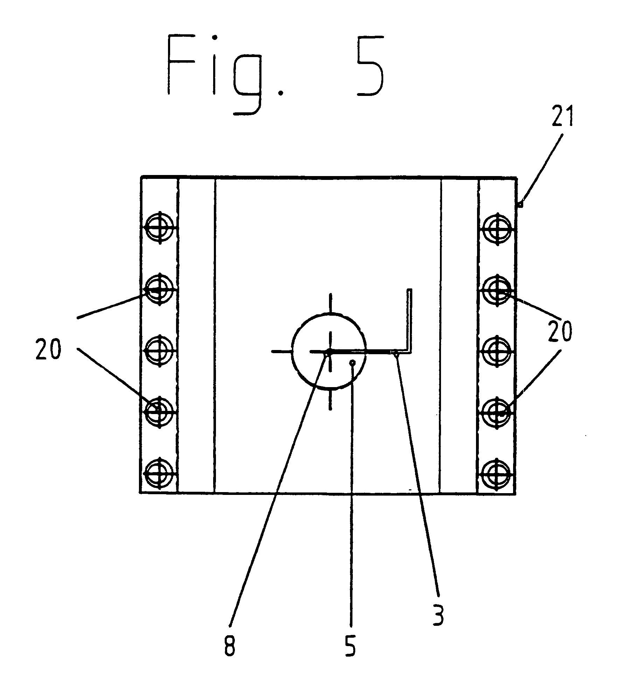

Zur Verbesserung der Strömungsverhältnisse im Bereich der Umlenkung der Luftströme nach dem Austritt aus dem Lüfter und vor dem Eintritt in die Blasdüsen 10 können die beiden Ecken zwischen den beiden hohlen Vertikalstegen 14 und dem hohlen Quersteg 13 jeweils abgeschrägt sein, wie gezeigt (Fig. 1-3), jedoch ist die normale, rechteckige Ausbildung, wie in Fig. 4 und 5 dargestellt, ausreichend. Am unteren Ende jedes hohlen Vertikalstegs 14 sind fünf Blasdüsen 10 in Reihe angeordnet. Wie aus der Untersicht gemäß Fig. 3 ersichtlich, weist das U der Zwischenkammer 11 im wesentlichen Rechteck- bzw. Kastenform auf, wobei zwischen Quer- und Vertikalstegen 10, 14 einerseits und den Seitenwänden 15 (aus Fig. 2 ist nur eine derselben zu entnehmen) eine Art Trichter gebildet wird, in den die aus dem Innenraum 9 der Räucherkammer 1 in Pfeilrichtung C angesaugte Luft in Richtung auf die Einlaßöffnung 12 einströmen kann. Der Lüfter 5 weist dabei einen Ansaugstutzen 16 auf, der an die Einlaßöffnung 12 der Mischkammer 11 angeschlossen ist (Fig. 2). Bei der gezeigten Ausführungsform ist dabei die Einlaßöffnung 12 in das Innere 17 der Mischkammer 11 eingestülpt und tritt in den Ansaugstutzen 16 des Lüfters 5 ein, wobei es sich versteht, daß der Ringspalt zwischen diesen beiden Teilen möglichst gering sein soll.

Die Behälterpumpe 4 befindet sich naturgemäß am Anfang der Zuleitung 3 für den Flüssigrauch zur Sprühdüse 8, um den Flüssigrauch in der Zuleitung 3 unter Druck zu setzen. In der Zuleitung 3 ist ein zweckmäßig als Zweiwegeventil ausgebildetes Magnet-Durchflußventil 18 angeordnet, für dessen Beaufschlagung bzw. Steuerung eine Mikroprozessorsteuerung 19 vorgesehen ist. Wie eingangs erwähnt, erfolgt die Öffnung des Ventils in Intervallen, deren Anzahl und Dauer von dem Räuchergut in der Räucherkammer 1 einerseits und dem gewünschten Grad der Durchräucherung andererseits abhängig ist und jeweils programmiert wird.

Bei einer gebauten Ausführungsform hat sich als Sprühdüse 8 eine Axial-Vollkegeldüse mit einem Öffnungswinkel von 120 Grad bewährt, wobei der Ansaugstutzen 16 des Radiallüfters 5 einen Durchmesser von 215 mm aufwies.

Bei der beschriebenen Ausführungsform nach Fig. 1 bis 3 weisen die Blasdüsen 10 senkrecht nach unten. Bevorzugt wird jedoch die Anordnung nach der zweiten Ausführungsform der Mischkammer 21 gemäß Fig. 4 und 5, deren Anordnung in der Räucherkammer 1 die gleiche ist, wie oben beschrieben. Auch werden für gleiche Teile gleiche Bezugszeichen verwendet.

Wie aus den Fig. 4 und 5 zu entnehmen, divergieren hier die Blasrichtungen (Pfeile D) der Blasdüsen 20 nach unten beiderseits zu den Wänden der Räucherkammer 1 hin. Dabei hat es sich als vorteilhaft erwiesen, wenn die Blasrichtungen D gegenüber jeweils der Senkrechten einen Winkel von etwa 7° nach außen aufweisen. Hierdurch wird das aus den Düsen 20 austretende Gemisch an den Wänden entlang auf der Außenseite des Räucherguts zum Boden der Räucherkammer 1 hin geführt, woraufhin eine Umlenkung nach innen und Aufwärtsführung in Saugrichtung des Lüfters 5 erfolgt, durch das Räuchergut hindurch. Erfahrungsgemäß ergibt die besagte Schrägstellung der Blasdüsen 20 in bestimmten Fällen eine gleichmäßigere Beaufschlagung des durwegs nicht gezeigten Räuchergutes.

## Patentansprüche

1. Verfahren zur Behandlung von Räuchergut, insbesondere von Fleisch- und Wurstwaren, mit einem Gemisch aus Luft und einer als Flüssigrauch bezeichneten, wasserlöslichen Flüssigkeit mit Rauchgeruch und -geschmack, die in die Luft einer Räucherkammer eingesprüht wird, **dadurch gekennzeichnet, daß** reiner Flüssigrauch unmittelbar in von einem Lüfter aus der Räucherkammer in einen gesonderten Mischbereich gesaugte Luft im Einlaß dieses Mischbereichs saugseitig koaxial zum Lüfter eingesprüht, im Bereich des Einlasses unter Druckerhöhung in einen erweiteren Mischbereich hinein verwirbelt und anschließend wieder in die Räucherkammer entspannt wird, wobei die strömende Luft in der geschlossenen Räucherkammer geführt wird.

2. Verfahren nach Anspruch 1, **dadurch gekennzeichnet, daß** der Flüssigrauch mit 3 bar eingesprüht wird.

3. Vorrichtung zur Ausführung des Verfahrens nach einem der Ansprüche 1 und 2 mit einer Räucherkammer (1), einer Sprüheinrichtung (2), einer Zufuhrleitung (3) für Flüssigrauch und einem Lüfter (5), **dadurch gekennzeichnet, daß** der Lüfter (5) in einer gesonderten, einen erweiterten Mischbereich bildenden Mischkammer (11) mit einem Ansaugstutzen (16) an einer Einlaßöffnung (12) dieser Mischkammer (11) angeschlossen ist, und **daß** dieser Einlaßöffnung (12) die Sprüheinrichtung in Form einer Sprühdüse (8) für den reinen Flüssigrauch unmittelbar am Ende der Zufuhrleitung (3) zugeordnet und zwecks unmittelbaren Einsprühens in den Lüfter (5) koaxial zu diesem saugseitig angeordnet ist, wobei auf der Druckseite des Lüftes mindestens eine in die Räucherkammer (9) öffnende Blasdüse (10) für das verwirbelte Gemisch aus Luft und Flüssigrauch angeordnet ist und der Mischbereich sich zwischen Sprühdüse und Blasdüse befindet.

4. Vorrichtung nach Anspruch 3, **dadurch gekennzeichnet, daß** die Mischkammer (11) eine zentral im oberen Bereich der Räucherkammer (1) angeordnete und im Querschnitt im wesentlichen umgekehrt U-förmig mit hohlem Quersteg (13) und zwei hohlen Vertikalstegen (14) ausgebildete Hohlhaube ist, die im Zentrum des Querstegs des U den als Radiallüfter ausgebildeten Lüfter (5) aufweist und an den Enden der beiden Vertikalstege (14) jeweils mindestens eine Blasdüse (10) mit Blasrichtung nach unten besitzt.

5. Vorrichtung nach Anspruch 4, **dadurch gekennzeichnet, daß** der hohle Quersteg (13) des U eine lichte Höhe (h) aufweist, die nur geringfügig höher ist als die Dicke (d) des Radiallüfters (5).

6. Vorrichtung nach den Ansprüchen 4 oder 5, **dadurch gekennzeichnet, daß** die beiden hohlen Vertikalstege (14) innen an den Übergängen zum hohlen Quersteg (13) jeweils abgeschrägt sind.

7. Vorrichtung nach Anspruch 4, **dadurch gekennzeichnet, daß** am unteren Ende jedes hohlen Vertikalstegs (14) fünf Blasdüsen (10) in Reihe angeordnet sind.

8. Vorrichtung nach Anspruch 7, **dadurch gekennzeichnet, daß** die Blasrichtungen (Pfeile D, Fig. 4) der Blasdüsen (20) nach unten beiderseits zu den Wänden der Räucherkammer (1) hin divergieren.

9. Vorrichtung nach Anspruch 8, **dadurch gekennzeichnet, daß** die Blasrichtungen (D) gegenüber jeweils der Senkrechten einen Winkel von etwa 7° nach außen aufweisen.

10. Vorrichtung nach Anspruch 3, **dadurch gekennzeichnet, daß** am Anfang der Zufuhrleitung (3) für den Flüssigrauch zur Sprühdüse (8) eine Behälterpumpe (4) angeordnet ist, um den Flüssigrauch in der Zuleitung (3) unter Druck zu setzen.

11. Vorrichtung nach Anspruch 3, **dadurch gekennzeichnet, daß** in der Zuleitung ein Magnet-Durchflußventil (18) angeordnet ist.

12. Vorrichtung nach Anspruch 11, **dadurch gekennzeichnet, daß** eine Mikroprozessorsteuerung (19) für die Beaufschlagung des Ventils (18) vorgesehen ist.

13. Vorrichtung nach Anspruch 11 oder 12, **dadurch gekennzeichnet, daß** das Ventil (18) ein Zweiwegeventil ist.

14. Vorrichtung nach Anspruch 3, **dadurch gekennzeichnet, daß** die Sprühdüse (8) eine Axial-Vollkegeldüse mit einem Öffnungswinkel von etwa 120 Grad ist und der Ansaugstutzen (16) des Radiallüfters (5) einen Durchmesser von 215 mm aufweist.

## Claims

1. Method for the treatment of food to be smoked, particularly of meat and sausages, with a mixture of air and a watersoluble liquid having the smell and the taste of smoke, a liquid which is called liquid smoke also, and which is sprayed into the air of a smoking chamber, **characterized in that** pure liquid smoke is sprayed immediately into air sucked by a fan out of the smoking chamber into a separate mixing region, spraying it into an access to this mixing region coaxially to the fan on its suction side, is swirled within this access under a pressure increase into a widened mixing region, and subsequently is relaxed into the smoking chamber again, whereby the flowing air is guided in the closed smoking chamber.

2. Method according to claim 1, **characterized in that** the liquid smoke is sprayed under a pressure of 3 bar.

3. Apparatus for carrying out the method in accordance with one of claims 1 and 2 comprising a smoking chamber (1), a spraying member (2), a supply conduit (3) for liquid smoke, and a fan (5), **characterized in that** the fan (5) in a separate mixing chamber (11) forming a widened mixing region is by an intake port (16) connected to an inlet opening (12) of this mixing chamber (11), and that to this inlet opening (12) the spraying member in the form of a spray nozzle (8) for the pure liquid smoke is allocated immediately at the end of supply conduit (3), and for direct spraying into the fan (5) is arranged coaxially at the suction side of the latter, at least one blowing nozzle (10) for the swirled mixture of air and liquid smoke being arranged at the pressure side of the fan (5) and opening into the smoking chamber (1), and that the mixing region is located between spray nozzle (8) and blowing nozzle (10).

4. Apparatus according to claim 3, **characterized in that** the mixing chamber (11) is a hollow hood which is arranged centrally in the upper region of the smoking chamber (1) and is formed essentially inversely U-shaped in its cross-section with a hollow transversal web (13) and two hollow vertical webs (14), which hollow hood in the center of the transversal web of the U comprises the fan (5) formed as a radial fan, and which hollow hood at each of the ends of both vertical webs (14) comprising at least one blowing nozzle (10) having a blowing direction aiming downwardly.

5. Apparatus according to claim 4, **characterized in that** the hollow transversal web (13) of the U possesses a clearance (h) which is only slightly larger than the thickness (d) of the radial fan (5).

6. Apparatus according to claim 3 or 5, **characterized in that** the two hollow verticals webs (14) at their inner junctions with the hollow transversal web (13) are chamfered each.

7. Apparatus according to claim 4, **characterized in that** at the lower end of each of the hollow vertical webs (14) five blowing nozzles (10) are arranged in a row.

8. Apparatus according to claim 7, **characterized in that** the blowing directions (arrows D, fig. 4) of the blowing nozzles (20) are downwardly diverging towards the walls of the smoking chamber (1) at both sides thereof.

9. Apparatus according to claim 8, **characterized in that** the blowing directions (D) show an angle of approximately 7° to the outer sides.

10. Apparatus according to claim 3, **characterized in that** at the beginning of conduit (3) supplying liquid smoke towards the spray nozzle (8) a container pump (4) is arranged for setting the liquid smoke within supply conduit (3) under pressure.

11. Apparatus according to claim 3, **characterized in that** in conduit (3) a magneto-flow-valve (18) is arranged.

12. Apparatus according to claim 11, **characterized in that** for controlling the valve (18) a microprocessor control (19) is provided.

13. Apparatus according to claim 11 or 12, **characterized in that** the valve (18) is a two-way valve.

14. Apparatus according to claim 3, **characterized in that** the spray nozzle (18) is an axial full cone nozzle with an opening angle of approximately 120°, and that the intake port (16) of the radial fan (5) has a diameter of 215 mm.

## Revendications

1. Procédé pour le traitement de produits a fumer, en particulier de charcuteries et de saucisses, par un mélange d'air et d'un liquide soluble dans l'eau, qualifié d'agent de fumage liquide, ayant une odeur et un goût fumés, qui est pulvérisé dans l'air d'une chambre de fumage, **caractérisé en ce que** l'agent de fumage liquide pur est pulvérisé directement dans de l'air aspiré par un ventilateur, hors de la chambre de fumage, coaxialement avec la partie d'aspiration du ventilateur, dans une zone de mélange séparée, qu'il est mis en tourbillon avec élévation de pression dans cette zone de mélange et, finalement, détendu dans la chambre de fumage, l'air coulant étant guidé dans la chambre de fumage fermée.

2. Procédé selon la revendication 1, **caracterisé en ce que** l'agent de fumage liquide est pulvérisé à une pression de 3 bars.

3. Dispositif pour la mise en oeuvre du procédé selon l'une des revendications 1 ou 2 comportant une chambre de fumage (1), un dispositif de pulvérisation (2), une conduite d'amenée (3) pour l'agent de fumage liquide et un ventilateur (5), **caractérisé en ce que** le ventilateur (5) est placé dans une chambre de mélange (11) séparée formant une zone de mélange élargie avec un support d'aspiration (16) qui est formé sur une ouverture d'admission (12) de cette chambre de mélange (11) et **en ce que**, dans cette ouverture d'admission (12), le dispositif de pulvérisation en forme d'une buse de pulvérisation (8) pour l'agent de fumage liquide pur, est placé directement à l'extrémité de la conduite d'amenée (3) et est disposé, pour une dispersion directe dans le ventilateur (5), coaxialement avec la partie d'aspiration de celui-ci, au moins une buse soufflante (10) débouchant dans la chambre de fumage (9), pour le mélange tourbillonnant d'air et d'agent de fumage liquide, étant placée sur la partie soufflante du ventilateur, et la zone de mélange se trouvant entre la buse de pulvérisation et la buse soufflante.

4. Dispositif selon la revendication 3, **caractérisé en ce que** la chambre de mélange (11) est placée au centre de la partie supérieure de la chambre de fumage (1) et ayant, en coupe transversale, la forme essentiellement d'un U renversé, et bornée par un barreau transversal creux (13) et deux barreaux verticaux creux (14), qui est équipée au centre du barreau transversal du U, du ventilateur (5) formé comme un ventilateur radial et qui possède aux deux extrémités des deux barreaux verticaux (14) respectivement au moins une buse soufflante (10) avec une direction soufflante vers le bas.

5. Dispositif selon la revendication 4, **caractérisé en ce que** le barreau transversal creux (13) du U présente une hauteur interne qui est seulement légèrement supérieure à l'épaisseur (d) du ventilateur radial (5).

6. Dispositif selon l'une des revendications 3 et 5, **caractérisé en ce que** les deux barreaux verticaux creux (14) sont éventuellement chanfreinés à l'intérieur avec une liaison avec le barreau transversal creux (13).

7. Dispositif selon la revendication 4, **caractérisé en ce qu'**à l'extrémité inférieure de chaque barreau vertical creux (14) sont disposées cinq buses soufflantes (10) en rangées.

8. Dispositif selon la revendication 7, **caractérisé en ce que** les directions de soufflage (Flèches D, Figure 4) des buses soufflantes (20) divergent vers le bas des deux côtés des parois de la chambre de fumage (11).

9. Dispositif selon la revendication 8, **caractérisé en ce que** les directions de soufflage (D) presentent éventuellement un angle d'environ 7° par rapport à la verticale.

10. Dispositif selon la revendication 3, **caractérisé en ce qu'**au début de la conduite d'amenée (3) est placée une pompe de réserve (4) pour l'agent de fumage liquide des buses de projection (8) et pour mettre sous pression l'agent de fumage liquide dans la conduite (3).

11. Dispositif selon la revendication 3, **caractérisé en ce que** dans la conduite est placée une soupape d'écoulement magnétique (18).

12. Dispositif selon la revendication 11, **caractérisé en ce qu'**une commande par microprocesseur (19) est prévue pour l'amenée à la soupape (18).

13. Dispositif selon la revendication 11 ou 12, **caractérisé en ce que** la soupape (18) est une soupape double.

14. Dispositif selon la revendication 3, **caractérisé en ce que** la buse soufflante (8) est une buse conique axiale avec un angle d'ouverture d'environ 120 degrés et que le support d'aspiration (16) du ventilateur radial (5) a un diamètre de 215 mm.
